# EUROPÄISCHE PATENTSCHRIFT

(11) **EP 3 590 344 B1**
(45) Veröffentlichungstag und Bekanntmachung des Hinweises auf die Patenterteilung: **16.09.2020**
(21) Anmeldenummer: 18181189.4
(22) Anmeldetag: 02.07.2018
(51) Int. Cl.: B65B 51/22, B65B 51/30, A22C 11/00, A22C 11/10, A22C 11/12

(54) **VERSCHLUSSMODUL UND VERFAHREN ZUM VERSCHLIESSEN UND/ODER TRENNEN VON GEFÜLLTEN ÜBER EINEN WURSTZOPF VERBUNDENEN WURSTHÜLLEN**
CLOSURE MODULE AND METHOD FOR CLOSING AND/OR SEPARATING FILLED SAUSAGE CASINGS CONNECTED WITH A BRAID
MODULE DE FERMETURE ET PROCÉDÉ DE FERMETURE ET/OU DE SÉPARATION DES ENVELOPPES DE SAUCISSE REMPLIES RELIÉES À L'AIDE D'UNE TRESSE DE CHAIR À SAUCISSE

(43) Veröffentlichungstag der Anmeldung: 08.01.2020
(73) Patentinhaber: Albert Handtmann Maschinenfabrik GmbH & Co. KG, 88400 Biberach (DE)
(72) Erfinder: STROHM, Kurt, 88448 Attenweiler (DE); SCHLIESSER, Gerhard, 88489 Wain (DE); BAECHTLE, Manfred, 88433 Schemmerhofen (DE); WINGHART, Robert, 89613 Oberstadion (DE); OSSWALD, Florian, 89079 Ulm/Einsingen (DE); MERK, Jochen, 88416 Ochsenhausen (DE)
(74) Vertreter: Grünecker Patent- und Rechtsanwälte PartG mbB

(56) Entgegenhaltungen:
- AT-B- 178 854
- DE-B- 1 080 011
- GB-A- 716 783
- KR-A- 20040 017 104
- US-A1- 2004 211 156

## Beschreibung

Die Erfindung betrifft ein Verschlussmodul und ein Verfahren zum Verschließen und/oder Trennen von gefüllten über einen Wurstzopf verbundenen Wursthüllen bzw. auch zum Verschließen und/oder Trennen von Wursthüllenenden. Aus der US2004/211156A1 ist bereits eine Füllmaschine zum Erzeugen eines Wurststrangs mit einer Verdrängereinrichtung zum Verdrängen pastöser Masse mit zwei Greifern bekannt, die nicht gegenüber liegen, sondern nebeneinander und als Klammern ausgebildet sind. Die pastöse Masse kann durch die Vorrichtung verdrängt werden, wobei die Abteilstelle gespreizt werden kann. Ferner umfasst die Vorrichtung eine Wickeleinrichtung zum Umwickeln des Wurstzopfs. Die Umwickelung ist aus einer schmelzbaren synthetischen Faser gebildet. Eine Fixiereinrichtung ist derart ausgebildet, dass sie radial Wärme in den Abteilbereich, ähnlich wie bei einer Löteinrichtung, einbringt. Daraufhin schmilzt die Umwickelung. In diesem Dokument gibt es keine erste und zweite Elektrode, durch die im geschlossenen Zustand der Stempel ein Strom von der ersten Elektrode in den Wurstzopf und über den Wurstzopf in die zweite Elektrode fließen kann. Darüber hinaus zeigt dieses Dokument auch nicht, dass die Vorrichtung als Handgerät ausgebildet ist.

Die Druckschrift KR20040017104 betrifft ein Gerät, um Plastiktüten punktuell zu verschweißen. Hier kommt ein PTC-Heizelement (Kaltleiter) zum Einsatz. Hier fließt also der Strom durch eine Heizeinrichtung und nicht von einer Elektrode zur anderen.

Die AT178854B betrifft eine Vorrichtung, die erst einmal den gefüllten Wurststrang unterteilt und Brät verdrängt.

Die Dokumente DE1080011B und GB716783A beschreiben ebenfalls bereits Vorschlussmodule mit Stempeln, die die Aufgabe haben, das Wurstbrät zu verdrängen, um erst einmal den Wurstzopf herzustellen.

Bei der Herstellung von Wurstprodukten durch Füll- und Portioniersysteme werden hauptsächlich Natur-, Kunst- und Kollagendärme als Wursthüllen verwendet und mittels einer Vakuumfüllmaschine mit Brät gefüllt. Durch das Einschnüren bzw. Abteilen (z.B. Abdrehen) der befüllten Wursthüllen innerhalb der Abdrehlinie ergibt sich eine Wurstkette aus mehreren zusammenhängenden, gefüllten Wursthüllen, d.h. Portionen. Die zusammenhängenden Portionen werden an definierten Abteilstellen verschlossen, so dass sich die Abteilstelle, beim Trennvorgang mit Hilfe z.B. eines Messers, nicht wieder öffnen kann. Ebenso müssen offene Wurstenden bei einem Darmriss sowie das Ende der Wurstkette verschlossen werden.

Zum Verschließen von Wurstportionen sind bereits beispielsweise Clipper zum Setzen von Metallclips bekannt. In der EP 1609366 ist es bereits beschrieben, einen elektrischen Strom an zwei benachbarte Wurstportionen anzulegen, der dann von einer Wurstportion zur benachbarten Wurstportion fließt, wodurch der dazwischenliegende Wurstzopf durchtrennt werden kann. Dadurch, dass der Strom in die Würste eingekoppelt wird, sind relativ hohe Stromstärken notwendig. Somit ist nicht ausgeschlossen, dass es zu Reaktionen im Füllgut und zur Schädigung der empfindlichen Wursthüllen kommt. Darüber hinaus kommen die Elektroden auch direkt mit den Wurstkuppen der Wurstportionen in Kontakt. An den Wurstkuppen entstehen jedoch durch die z.B. abgedrehte Abteilstelle und Verdrängung der Wurstmasse mechanische Spannungen. Wird nun an der Wurstkuppe ein Strom eingeleitet, kann die unter mechanischer Spannung stehende Wursthülle beim Erwärmen einreißen. Dies ist insbesondere bei empfindlichen Naturdärmen möglich. Ein weiterer Nachteil der bekannten Vorrichtung liegt darin, dass das Ende der Wurstkette nicht verschlossen werden kann, da stets zwei Würste notwendig sind, um die Spannung anzulegen. Auch das Umrüsten bei unterschiedlichen Kalibern ist umständlich.

Hiervon ausgehend liegt der vorliegenden Erfindung die Aufgabe zugrunde, ein verbessertes Verschlussmodul und ein verbessertes Verfahren zum Verschließen und/oder Trennen von gefüllten über einen Wurstzopf verbundenen Wursthüllen bereitzustellen, die ein schonenderes, einfacheres und zuverlässigeres Verschließen von gefüllten Wursthüllen, selbst am Wurstkettenende ermöglichen.

Erfindungsgemäß wird diese Aufgabe durch die Merkmale der Ansprüche 1 und 11 gelöst.

Gemäß der vorliegenden Erfindung ist ein Verschlussmodul vorgesehen zum Verschließen und/oder Trennen von gefüllten über einen Wurstzopf verbundenen Wursthüllen mit zwei relativ aufeinander zu beweglichen Stempeln, die derart angeordnet sind, dass ein Wurstzopf dazwischen platzierbar ist, und die den Wurstzopf in einem geschlossenen Zustand einklemmen können und mit einer ersten und einer zweiten Elektrode, durch die im geschlossenen Zustand der Stempel ein Strom von der ersten Elektrode in den Wurstzopf und über den Wurstzopf in die zweite Elektrode fließen kann.

Der Stempel kann einteilig oder mehrteilig ausgebildet sein. Die beweglichen Stempel sind also derart angeordnet, dass ein Wurstzopf dazwischen platzierbar ist, d.h., dass die Stempel auf gegenüberliegenden Seiten des Wurstzopfes angeordnet sind. Die Stempel können relativ aufeinander zu bewegt werden, das bedeutet, dass zumindest ein Stempel zum anderen hin bewegbar ist, so dass sich der Stempelabstand reduzieren lässt und der dazwischenliegende Wurstzopf eingeklemmt werden kann, jedoch nicht durch die Stempel abgetrennt wird. Somit wird der Wurstzopf während des Verschließens und /oder Trennens sicher gehalten. Der Strom zum Verschließen und/oder Trennen kann nur im geschlossenen Zustand der Stempel fließen, da der Wurstzopf, d.h. z.B. die abgedrehte Wursthülle zwischen den gefüllten Wurstportionen als Elektrolyt zwischen dem Elektrodenpaar dient. Der Strom kann also von einer Elektrode durch den Wurstzopf zur anderen Elektrode fließen. Die elektrische Energie wird beim Durchfließen des Wurstzopfes (Widerstand) in thermische Energie umgewandelt und erwärmt diesen. Die Elektroden berühren nicht die Wursthülle, sondern kontaktieren lediglich den Wurstzopf. Im Naturdarm beginnt dann beispielsweise die thermische Denaturierung von Kollagen (Gerinnung von Eiweiß). Ab ca. 100° verdampft weiter Wasser, so dass der Naturdarm des Wurstzopfes koaguliert und somit verschlossen wird. Das bedeutet, dass die aufeinanderfolgenden gefüllten Wursthüllen über den Wurstzopf verschlossen sind aber noch zusammenhängen. Bei weiterer Energiezuführung steigt die Temperatur und es kommt zum Zersetzen des Darms und zum Abtrennen. Grundsätzlich besteht die Möglichkeit, den Wurstzopf nur so weit zu erwärmen, dass er koaguliert bzw. die gefüllten Wursthüllen verschlossen werden. Ein ganz wesentlicher Punkt bei der vorliegenden Erfindung ist die Klemmung des Wurstzopfes oder des offenen Wurstendes (bei der letzten Portion der Kette). An der Wurstkuppe entstehen durch die z.B. abgedrehte Abteilstelle und Verdrängung der Wurstmasse (Brät) mechanische Spannungen an der Wursthülle. Wird nun an der Wurstkuppe ein Strom eingeleitet, kann die unter mechanischer Spannung stehende Wursthülle beim Erwärmen einreißen. Durch das Klemmen der Abteilstelle vor dem Übergang zur Wurstkuppe werden die mechanischen Spannungen "festgehalten". Der Strom wird durch die Elektroden zwischen den geklemmten Stellen oder im Bereich der geklemmten Stelle innerhalb des Wurstzopfes oder des offenen Wurstendes eingeleitet und fließt somit nicht über die unter mechanischer Spannung stehende Wursthülle der Wurstkuppen. Die Klemmung der Abteilstelle darf erst nach dem Ende des Stromflusses bzw. nach der Denaturierung des z.B. Naturdarms entfernt werden, so dass ein prozesssicheres Verschließen möglich ist. Somit kann wirksam die Beschädigung der Wurstkuppen beim Abtrennvorgang verhindert werden.

Ein weiterer Vorteil der Erfindung liegt darin, dass dadurch, dass der Wurstzopf über die aufeinander zu bewegbaren Stempel und Elektroden verschlossen bzw. verschlossen und getrennt werden kann, auch am Ende einer Wurstkette die letzte Wurst noch verschlossen werden kann. Dadurch entfällt im Vergleich zum Stand der Technik, das für das Verschließen einer Wurstportion am Ende einer Wurstgruppe eine Zusatzportion mit oder ohne Brät benötigt wird. Im Stand der Technik wurde zusätzlicher leerer Darm oft mitproduziert, damit am Ende einer Wurstgruppe beispielsweise ein Knoten gemacht werden konnte. Außerdem musste der Bediener im Stand der Technik bei der Herstellung einer zusätzlichen Leerportion die Wurstmasse vor dem Verschließen in die zu verschließende Wurstportion zurückstreifen und auf Portionslänge und Prallheit achten. Die Erfindung ermöglicht also eine Reduktion von Darm- und/oder Brätkosten.

Außerdem ergibt sich eine Produktoptimierung hinsichtlich Gewicht, Länge, Optik und Prallheit der zu verschließenden Portionen. Insgesamt ergibt sich durch sicher verschlossene Wurstenden auch eine Verbesserung der Hygiene.

Da die beweglichen Stempel auf dem Wurstzopf bewegt werden, der ja im Wesentlichen stets einen gleichen Durchmesser hat, kann das Verschlussmodul beliebig für unterschiedliche Kaliber eingesetzt werden, ohne dass ein mechanisches Umrüsten notwendig ist.

Ferner ergibt sich der Vorteil, dass kein Verbrauchsmaterial, wie zum Beispiel ein Metallclip notwendig ist. Somit befindet sich kein Fremdmaterial im Produkt.

Ferner ergibt sich eine Leistungssteigerung und Kostensenkung durch Reduzierung der Verschlusszeit und durch Reduzierung des Darmverbrauchs.

Das Stempelelement hat nicht nur die vorteilhafte Funktion den Wurstzopf abzuklemmen, sondern dient auch als Abstandshalter und Isolator zur Wurstkuppe bzw. den beiden benachbarten Wurstkuppen.

Gemäß der vorliegenden Erfindung sind die Elektroden also derart angeordnet, dass sie von den Wurstkuppen der Wursthüllen in geschlossenem Zustand der Stempel beabstandet sind, derart, dass die Elektroden die gefüllten Wursthüllen nicht berühren und elektrisch von diesen isoliert sind.

Dabei ist an zumindest der jeweiligen, der Wurstkuppe des Wurstzopfes zugewandten Seite (also der jeweiligen nach außen gewandten Seite) der Elektroden, eine Klemmstelle der Stempel angeordnet. Es können also in Längsrichtung des Wurstzopfes mehrere Klemmstellen oder aber eine durchgehende Klemmstelle vorgesehen sein. Wesentlich ist, dass der Wurstzopf an beiden Seiten neben den Elektroden geklemmt werden kann.

Bei der vorliegenden Erfindung können beide Elektroden z.B. in einem Stempel voneinander beabstandet angeordnet sein. Dann kann der Strom von einer Elektrode in den Wurstzopf fließen und in Längsrichtung durch den Wurstzopf hindurch bis zur zweiten Elektrode. Bei manchen Darmsorten hat sich herausgestellt, dass, wenn der Strom in Längsrichtung durch den Wurstzopf fließt, eine höhere Prozesssicherheit gegeben ist, als wenn der fließende Strom nur quer zur Abteilstelle fließt.

Es ist aber auch möglich, dass die erste Elektrode in einem der Stempel und die zweite Elektrode in dem gegenüberliegenden Stempel angeordnet ist. Die Elektroden können dabei direkt gegenüberliegen, so dass der Strom quer zur Längsrichtung durch den Wurstzopf fließt. Vorteilhafterweise können die Elektroden jedoch auch auf gegenüberliegenden Seiten des Wurstzopfes seitlich (d.h. in Längsrichtung) versetzt zueinander angeordnet sein. Dann ergibt sich wieder der Vorteil, dass der Strom ebenfalls in Längsrichtung durch die Wursthülle fließt, was bei manchen Wurstsorten vorteilhaft ist. Wenn die Elektroden auf gegenüberliegenden Seiten, d.h. jeweils in den gegenüberliegenden Stempeln angeordnet sind, können die Elektroden dann durch Schließen der Stempel relativ aufeinander zu bewegt werden, so dass schließlich der Strom durch den Wurstzopf fließen kann.

Gemäß der vorliegenden Erfindung sind die Elektroden im Stempel nach außen isoliert und an ihrem dem Wurstzopf zugewandten Ende ein freier Kontaktbereich vorgesehen. Dabei können die Elektroden in einem gemeinsamen Stempel angeordnet sein, d.h. einem einstückig ausgebildeten oder aber in einem jeweilig eigenen Stempelelement, die dann, beispielsweise durch Schrauben zu einem Stempel zusammengefügt werden können.

Vorteilhafterweise sind die Elektroden mit einem isolierenden Material beschichtet oder sind in isolierendes Material eingegossen, wobei der Kontaktbereich der Elektroden ausgespart ist, z.B. die Beschichtung in diesem Bereich entfernt worden ist, damit zwischen den Elektroden ein elektrischer Strom fließen kann. Durch die elektrisch nicht leitende Beschichtung oder das umgebende isolierende Material der Elektroden, können diese beispielsweise miteinander verschraubt werden, so dass dann beispielsweise die beschichteten bzw. eingegossenen Elektroden zusammen den Stempel bilden. So kann an der beschichteten bzw. mit isolierendem Material umgebenden Elektrode die Klemmung des Wurstzopfes stattfinden ohne dass ein elektrischer Kurschluss entsteht. Vorzugsweise kann dann auch eine Klemmung über die Elektroden erfolgen.

Vorteilhafterweise liegt der Abstand b der nebeneinander angeordneten Elektroden in einem Bereich von 0,5 mm bis 3 mm, derart, dass der bewegliche Stempel derart dimensioniert werden kann, dass er zwischen zwei gefüllte Wursthüllen platziert werden kann.

Vorteilhafterweise kann zumindest einer der gegenüberliegenden Stempel um eine Achse A2 und / oder A3, die sich entlang einer Längsrichtung L erstreckt drehbar gelagert sein, insbesondere zwei drehbar gelagert sein, derart, dass die gegenüberliegenden Klemmflächen im Wesentlichen parallel zueinander verlaufen. Da die drehbar gelagerten Stempel und damit natürlich auch die integrierten oder verbundenen Elektroden drehbar gelagert sind, können Fertigungstoleranzen und/oder Positionierfehler des Bedieners ausgeglichen werden. Dies ist wichtig, da die gegenüberliegenden Klemmflächen nahezu parallel sein müssen, um eine Klemmung des Wurstzopfes zu gewährleisten.

Die Elektroden und Stempel können manuell oder mittels Stellantrieb, insbesondere einem pneumatischen oder elektrischen Stellantrieb, relativ aufeinander zu bewegt werden.

Gemäß der Erfindung ist das Verschlussmodul als Handgerät ausgebildet ist, mit einem Griffbereich, der zwei beabstandet gegenüberliegende, relativ aufeinander zu bewegbare Griffelemente umfasst, die jeweils derart mit den Stempeln gekoppelt sind, dass, wenn die Griffelemente aufeinander zu bewegt werden, sich auch die jeweiligen Elektroden und Stempel aufeinander zu bewegen. Ein entsprechendes Handgerät ist besonders einfach handzuhaben und kann z.B. vom Bediener in Form einer Handzange auf einfache Art und

Weise eingesetzt werden. Es ist besonders vorteilhaft, wenn die Handzange derart ausgebildet ist, dass die beiden Griffelemente drehbar gelagert sind.

Gemäß einer bevorzugten Ausführungsform weist das Verschlussmodul an seinem dem Griffbereich abgewandten Ende einen hakenförmigen Bügel auf, der insbesondere zwei zu einer Spritze zulaufende Abschnitte aufweist. Da der Bügel sich um das vordere Ende des Verschlussmoduls erstreckt, dient der Bügel als Schutz gegen Beschädigung. Da der hakenförmige Bügel auf einer Seite geöffnet ist, kann der Haken zur Positionierung des Moduls bei Nichtgebrauch benutzt werden.

Das erfindungsgemäße Verfahren zum Verschließen und/oder Trennen von gefüllten über einen Wurstzopf verbundenen Wursthüllen weist folgende Schritte auf: Platzieren eines Wurstzopfes zwischen einem ersten Stempel und einem zweiten Stempel, Bewegen der Stempel relativ aufeinander zu derart, dass die Stempel geschlossen werden und den Wurstzopf einklemmen, wonach ein Strom von der ersten Elektrode in den Wurstzopf fließt und über den Wurstzopf in die zweite Elektrode, wodurch die gefüllten Wursthüllen verschlossen vorzugsweise zusätzlich getrennt werden.

Dabei kann der Wurstzopf zumindest an der, der jeweiligen Wurstkuppe abgewandten Seite der Elektroden durch die Stempel geklemmt werden. Die Stirnfläche der Elektroden kann ebenfalls Teil der Klemmfläche sein. Die Elektroden geben während eines ersten Zeitabschnitts t₁ eine Energiemenge pro Zeit ab, derart, dass sich der Wurstzopf so stark erwärmt, dass z.B. das Eiweiß im Wurstzopf koaguliert. Eine Koagulation findet beispielsweise bei einer Temperatur in einem Bereich von 65 °C bis 100 °C statt. Somit können die gefüllten Wursthüllen verschlossen werden. Möchte man nun die gefüllten Wursthüllen auch noch voneinander trennen, kann während eines zweiten Zeitabschnitts weiter Energie zugeführt werden wobei vorzugsweise die Energiemenge pro Zeit, insbesondere peakartig erhöht werden, derart, dass es zu einem Zersetzen und Trennen des Wurstzopfes kommt. Vorteilhafterweise werden die Stempelelemente erst dann wieder auseinanderbewegt, wenn die Stromzufuhr unterbrochen ist, d.h., dass die Klemmung des Wurstzopfes erst aufgehoben wird, wenn kein Strom mehr durch die Elektroden fließt.

Das Verschlussmodul ist insbesondere geeignet für elektrisch leitende Wursthüllen, wie z.B. Schafdarm, Schweinedarm, Rinderdarm und Kollagendarm.

Bei dem erfindungsgemäßen Verfahren haben sich hochfrequente Ströme, insbesondere in einem Frequenzbereich von 300 kHz bis 500 kHz in einem Spannungsbereich von 50 bis 500 V, insbesondere in einem Spannungsbereich von 80 bis 430 V als vorteilhaft herausgestellt.

Die Erfindung wird nachfolgend unter Bezugnahme der nachfolgenden Figuren näher erläutert.
- Fig. 1a: zeigt einen Schnitt durch ein Ausführungsbeispiel eines Verschlussmoduls gemäß der vorliegenden Erfindung,
- Fig. 1b: zeigt ein weiteres Ausführungsbeispiel eines Verschlussmoduls gemäß der vorliegenden Erfindung,
- Fig. 1c: zeigt ein weiteres Ausführungsbeispiel eines Verschlussmoduls gemäß der vorliegenden Erfindung,
- Fig. 1d: zeigt ein weiteres Ausführungsbeispiel eines Verschlussmoduls gemäß der vorliegenden Erfindung,
- Fig. 1e: zeigt ein weiteres Ausführungsbeispiel eines Verschlussmoduls gemäß der vorliegenden Erfindung,
- Fig. 2: zeigt ein bevorzugtes Ausführungsbeispiel eines erfindungsgemäßen Verschlussmoduls in Form einer Handzange,
- Fig. 3: zeigt eine teilweise aufgerissene Draufsicht der Fig. 2,
- Fig. 4: zeigt das in Fig. 2 gezeigte Verschlussmodul in geschlossenem Zustand,
- Fig. 5: zeigt eine Vorderansicht des in den Fig. 2 bis 4 gezeigten Verschlussmoduls,
- Fig. 6: zeigt eine Vorderansicht mit Produkt des in Fig. 2-5 gezeigten Verschlussmoduls,
- Fig. 7: zeigt eine Ansicht des in den Fig. 2 bis 6 gezeigten Ausführungsbeispiels in perspektivischer Darstellung.
- Fig. 8: zeigt eine weitere mögliche Ausführungsform gemäß der vorliegenden Erfindung

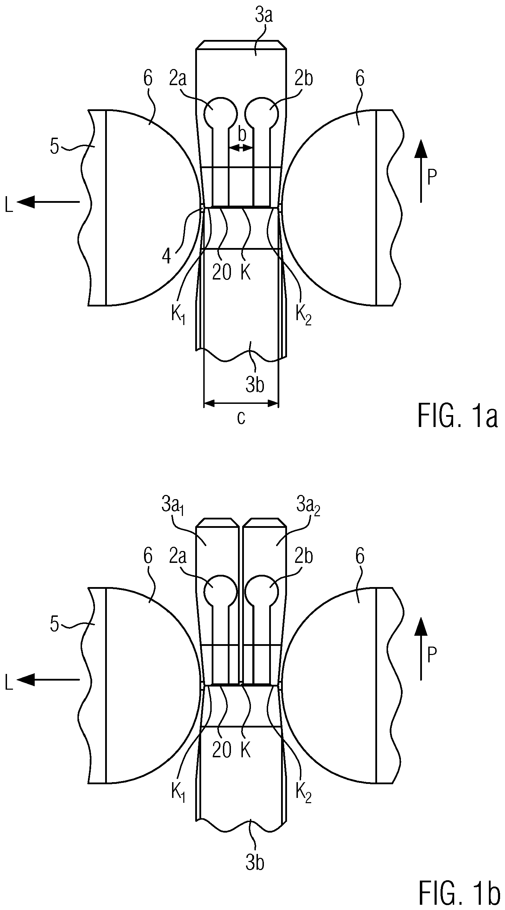

Fig. 1a zeigt schematisch ein erstes Ausführungsbeispiel eines Verschlussmoduls 1 gemäß der vorliegenden Erfindung. Das Verschlussmodul 1 dient zum Verschließen bzw. zum Verschließen und Trennen von gefüllten über einen Wurstzopf verbundenen Wursthüllen 5. Solche elektrisch leitende Wursthüllen können beispielsweise ein in Salzwasser gelagerter Naturdarm oder aber ein Kunst- oder Kollagendarm sein. Die Wursthülle wird vorab beispielsweise mittels einer Füllmaschine, z.B. Vakuumfüllmaschine mit pastöser Masse z.B. Brät gefüllt. Durch Einschnüren bzw. Abteilen der gefüllten Wursthüllen innerhalb einer Abdrehlinie ergibt sich eine Wurstkette aus mehreren zusammenhängenden, befüllten Wursthüllen 5, d.h. Portionen, die über einen verdrillten Wurstzopf 4 miteinander verbunden sind. Wie aus Fig. 1a hervorgeht, sind die Kuppen 6 der gefüllten Wursthüllen 5 über den Wurstzopf 4 verbunden. Die zusammenhängenden Wurstketten aus mehreren zusammenhängenden Portionen werden dann von dem Verschlussmodul 1 z.B. so verschlossen, dass sich die gefüllten Wursthüllen z.B. beim Trennvorgang mit Hilfe eines Messers nicht wieder öffnen können. Es ist aber auch möglich, wie nachfolgend noch näher beschrieben wird, mit Hilfe des Verschlussmoduls 1 die gefüllten Wursthüllen 5 mit dem Verschlussmodul 1 zu verschließen und den Wurstzopf zu durchtrennen. Auch ist ein Verschließen am Ende einer Wurstkette möglich.

Wie aus Fig. 1a hervorgeht umfasst das erfindungsgemäße Verschlussmodul 1 zwei Elektroden 2a, 2b, die hier nebeneinander in Längsrichtung L des gestreckten Wurstzopfes, d.h. in Richtung des gestreckten Wurstzopfes angeordnet sind. Die beiden Elektroden weisen beispielsweise einen Abstand b in einem Bereich von 0,5 mm bis 3 mm voneinander auf. Die Längsrichtung L entspricht ebenfalls der Längsrichtung L des Verschlusselements. Die beiden Elektroden 2a, 2b sind hier in einem Stempel 3a aus isolierendem Material integriert. Das Verschlussmodul weist einen weiteren Stempel 3b auf, der, wie Fig. 1a zeigt, im geschlossenen Zustand dem Stempelelement 3a gegenüberliegt, wobei zwischen den Stempeln 3a, 3b der Wurstzopf 4 platzierbar ist. Im geschlossenen Zustand der Stempel 3a, 3b kann der Wurstzopf 4 eingeklemmt werden. Die beiden Stempel 3a, 3b können bis auf Anschlag aufeinander zu bewegt werden. Im geschlossenen Zustand der Stempel 3a, 3b ergibt sich eine Klemmstelle K, die den Wurstzopf 4 klemmt. Hier ist die Stirnfläche der Elektroden ein Teil der Klemmfläche. Wesentlich ist jedoch, dass zumindest an der jeweiligen, der Kuppe 6 zugewandten Seite der Elektroden 2a, 2b eine Klemmstelle K1, K2 realisiert ist. Diese Klemmung ist vorteilhaft, da an der Wurstkuppe 6 durch die z.B. abgedrehte Abteilstelle und Verdrängung der Wurstmasse mechanische Spannungen an der Wursthülle entstehen. Wird nun an der Wurstkuppe 6 ein Strom eingeleitet, kann die unter mechanischer Spannung stehende Wursthülle 5 bei Erwärmung einreißen. Durch das Klemmen des Wurstzopfes 4 vor dem Übergang zu der oder den Wurstkuppen 6 werden die mechanischen Spannungen "festgehalten". Durch die Elektroden 2a, 2b wird ein Strom zwischen den Klemmstellen K1, K2 innerhalb des Wurstzopfes 4 oder des offenen Wurstendes eingeleitet und fließt somit nicht über die unter mechanischer Spannung stehenden Wurstkuppen, sondern von der ersten Elektrode in den Wurstzopf, über die Strecke b in Längsrichtung L durch den Wurstzopf in die zweite Elektrode 2b. Die Breite c der Stempel 3a, 3b ist im Wesentlichen kleiner als die Länge des Wurstzopfes 4, damit die Stempel mit den integrierten Elektroden zwischen den Wurstportionen platziert werden können und liegt z.B. in einem Bereich von 3 mm - 10 mm. Bei dem in Fig. 1a gezeigten Ausführungsbeispiel können die Elektroden 2a, 2b in dem isolierenden Material der Stempel eingegossen sein.

Fig. 1b entspricht dem in Fig. 1a gezeigten Ausführungsbeispiel, wobei hier jedoch ein Stempel 3a zweiteilig ausgebildet ist, d.h., dass die jeweiligen Elektroden 2a, 2b entweder in eigene Stempelelemente 3a₁ und 3a₂ aus isolierendem Material eingegossen werden, oder mit einer Beschichtung aus isolierendem Material entsprechend beschichtet sind. Die Beschichtung der Elektroden kann dann ebenso wie bei dem in Fig. 1a gezeigten Ausführungsbeispiel an den Kontaktstellen 20 entfernt sein, damit zwischen den Elektroden 2a, 2b ein elektrischer Strom fließen kann. Aufgrund der Beschichtung oder des isolierenden Materials können die beiden Stempelelemente 3a₁, 3a₂ beispielsweise durch Schrauben miteinander verbunden werden.

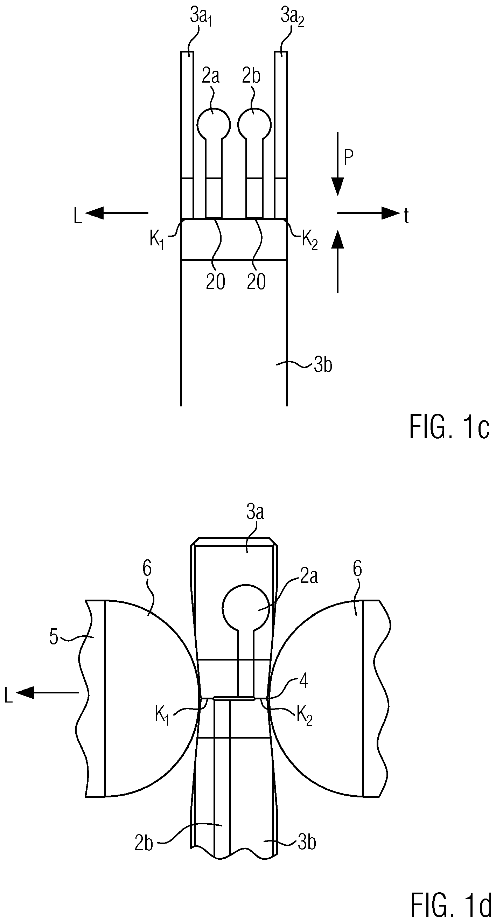

Fig. 1c ist eine weitere Ausführungsform der vorliegenden Erfindung und entspricht im Wesentlichen den in Fig. 1a und 1b gezeigten Ausführungsform, wobei hier beispielsweise der obere Stempel 3a aus zwei separaten in Längsrichtung L seitlich voneinander beabstandeten Elektroden 2a, 2b und separaten Stempelelementen 3a₁ und 3a₂ gebildet sind. Die einzelnen Elemente können beispielsweise an einer nicht dargestellten gemeinsamen Halterung befestigt sein und bilden zusammen den Stempel. Die Elektroden 2a und 2b können ebenfalls bis auf den Kontaktbereich 20 eine Isolierung aufweisen. Die Stempelelemente 3a₁, 3a₂ dienen dazu, die Klemmstellen K1 und K2 zusammen mit dem unteren Stempel 3b zu erzeugen. Vorzugsweise liegen auch die Stirnflächen der Elektroden 2a, 2b in der gleichen Ebene wie die Stirnflächen der Stempelelemente 3a₁, 3a₂, so dass der Wurstzopf 4 auch durch die Elektroden 2a, 2b geklemmt wird.

Bei diesem Ausführungsbeispiel sowie auch bei den anderen Ausführungsbeispielen müssen die Elektroden den Wurstzopf 4 nicht unbedingt klemmen, wesentlich ist jedoch, dass im geschlossenen Zustand der Stempel der Abstand zwischen der Stirnfläche der Elektroden und dem gegenüberliegenden Stempel so klein ist, dass die Stirnflächen der Elektroden den Wurstzopf berühren können, der als Elektrolyt dient.

Fig. 1d zeigt eine weitere Ausführungsform eines erfindungsgemäßen Verschlussmoduls, wobei jedoch die Elektroden in jeweiligen Stempeln 3a, 3b auf gegenüberliegenden Seiten des Wurstzopfes 4 integriert sind. Auch hier können wie bei den vorherigen Ausführungsbeispielen die Stempel 3a, 3b bis auf Anschlag gebracht werden, derart, dass der Wurstzopf 4 dazwischenliegt. Genau wie bei den vorherigen Ausführungsbeispielen kann über eine Elektrode 2a ein Strom zunächst in Längsrichtung L durch die Wursthülle fließen und dann durch die Elektrode 2b abfließen.

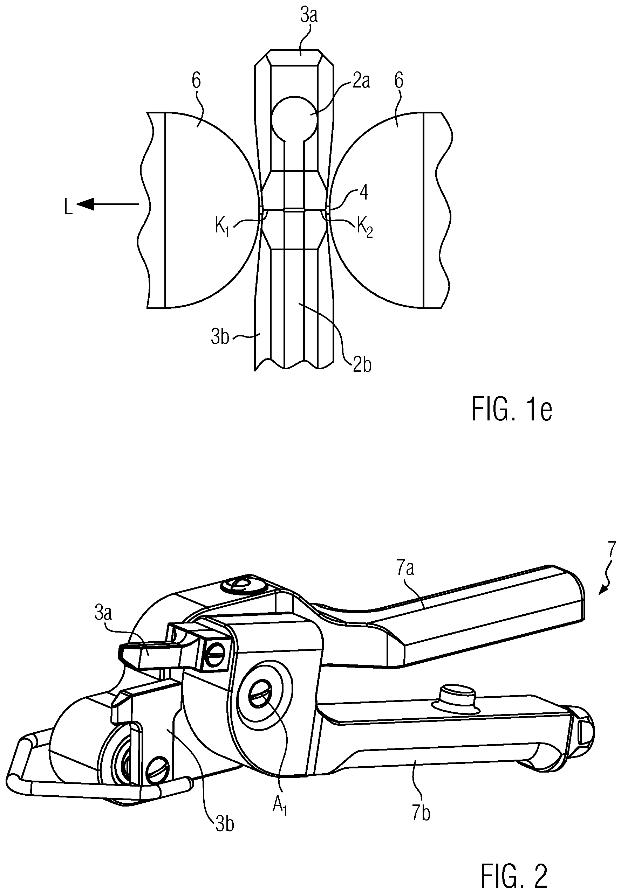

Fig. 1e zeigt eine weitere Ausführungsform gemäß der vorliegenden Erfindung, wobei hier ebenfalls die Elektroden 2a, 2b auf gegenüberliegenden Seiten in den beweglichen Stempeln 3a, 3b angeordnet sind, jedoch nicht wie in Fig. 1d seitlich, d.h. in Längsrichtung betrachtet voneinander beabstandet sind, sondern gegenüberliegen. Somit kann auch hier Strom von der Elektrode 2a senkrecht durch den Wurstzopf 4 zur Elektrode 2b fließen. Anders als bei den Ausführungsformen 1a bis 1 d können hier die Stempel 3a, 3b nur soweit aufeinander zu bewegt werden, dass es keinen Kurzschluss zwischen den Elektroden 2a, 2b geben kannHier ist zwischen den Elektroden ein Mindestabstand von 0,1 mm notwendig.

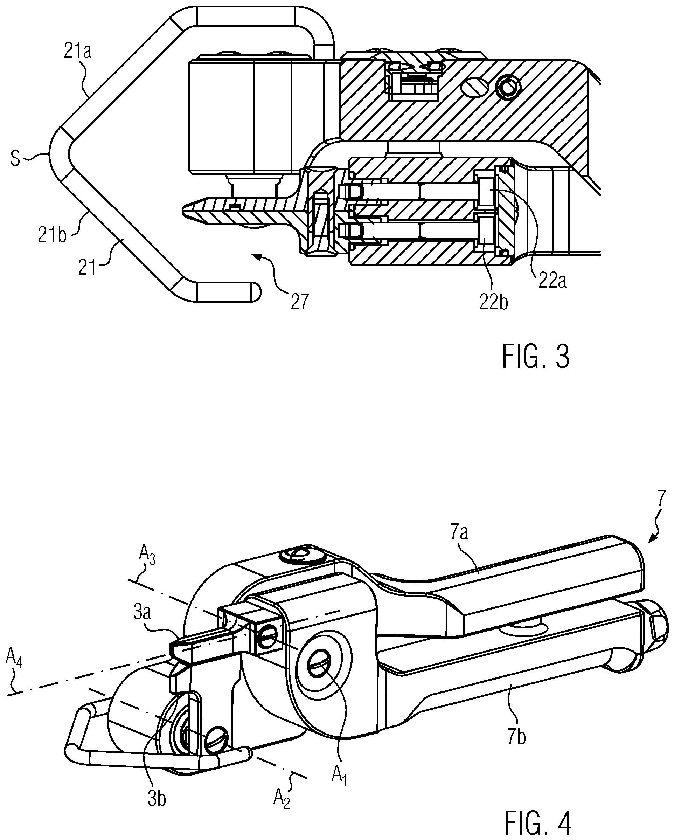

Fig. 2 bis 7 zeigen ein bevorzugtes Ausführungsbeispiel gemäß der vorliegenden Erfindung, wobei das Verschlussmodul 1 als Handmodul, insbesondere als Handzange ausgebildet ist. Dazu umfasst das Verschlussmodul einen Griffbereich 7 mit zwei relativ zueinander beweglichen Griffelementen 7a, 7b, die sich senkrecht zur Längsrichtung L erstrecken. Das obere längliche Griffelement 7a ist mit dem unteren Stempel 3b gekoppelt, das beispielsweise in diesem Ausführungsbeispiel keine Elektrode umfasst und nur als Amboss dient. Das untere Griffelement 7b ist mit dem Stempel 3a gekoppelt, der zwei Elektroden 2a, 2b umfasst. Die Griffelemente 7a, 7b sind um die Achse A1 drehbar gelagert. Werden nun die Griffe 7a, 7b aufeinander zu bewegt, bewegen sich auch die Stempel 3a, 3b aufeinander zu - bis in eine geschlossene Position, wie in Fig. 4 dargestellt ist. Wenn auch nicht dargestellt, können die Griffelemente 7a, 7b durch eine Feder in eine geöffnete Position vorgespannt sein.

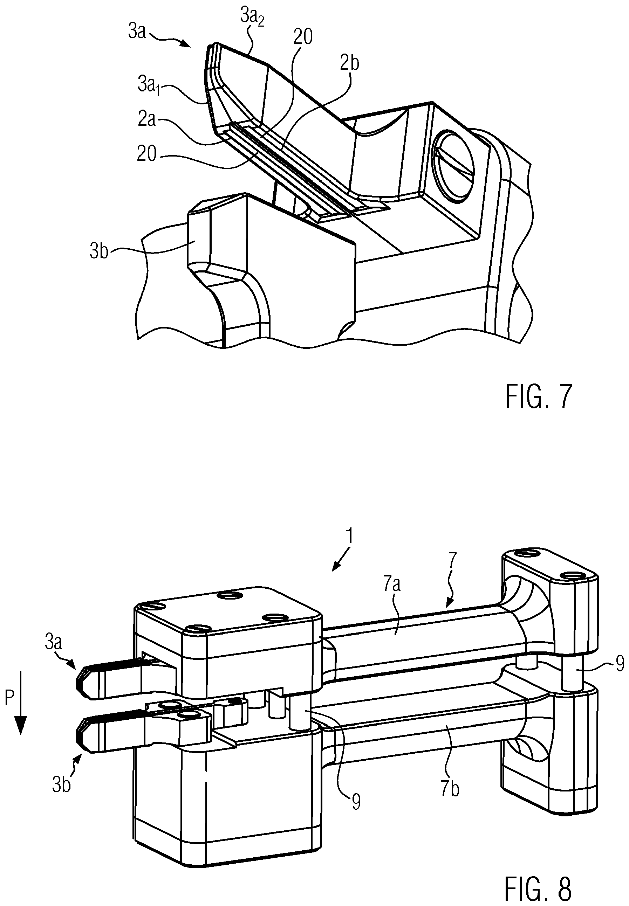

Wie insbesondere aus der Fig. 7 hervorgeht, die eine perspektivische Darstellung von schräg unten ist, weist dieses Ausführungsbeispiel zwei Elektroden 2a, 2b auf, die in dem oberen Stempel 3a angeordnet sind. Dabei setzt sich der obere Stempel 3a aus zwei Stempelelementen 3a₁ und 3a₂ zusammen, wie zuvor im Zusammenhang mit Fig. 1b erläutert wurde. Die Stempelelemente 3a₁ und 3a₂ weisen die innenliegenden Elektroden 2a und 2b auf, die an den Kontaktbereichen 20 freigelegt sind. Die beiden Stempelelemente 3a₁, 3a₂ sind miteinander verbunden, wobei deren Außenflächen im Wesentlichen spitz aufeinander zulaufen, derart, dass der Stempel 3a leicht zwischen die Würste eingefahren werden kann. Auch der untere Stempel 3b läuft im Wesentlichen konisch nach vorne zu. Wie insbesondere aus Fig. 3 hervorgeht, sind die Elektroden 2a, 2b mit den Elektrodenanschlüssen 22a, 22b verbunden und werden über diese Anschlüsse mit Strom versorgt, wobei die Stromversorgung über ein nicht dargestelltes Kabel erfolgen kann.

Gemäß einer bevorzugten Ausführungsform ist der untere Stempel 3b drehbar um die Achse A2 gelagert, hier vorzugsweise frei drehbar gelagert. Zusätzlich oder alternativ kann auch das Stempelelement 3a drehbar, insbesondere frei drehbar, um die Achse A3 gelagert sein. Die Achsen A2, A3 verlaufen im Wesentlichen entlang der Längsrichtung L, d.h. entlang einer Richtung, die dem gestreckten Wurstzopf 4 entspricht bzw. im Wesentlichen senkrecht zu einer Richtung der Längsachse der Griffelemente 7a, 7b. So kann ermöglicht werden, dass die gegenüberliegenden Klemmflächen im Wesentlichen parallel zueinander verlaufen, um eine optimale Klemmwirkung zu erzielen. Bei diesem und auch den anderen Ausführungsbeispielen ist es auch möglich, dass der obere und/oder untere Stempel(vorzugsweise der obere Stempel) um eine jeweilige Achse A4 frei drehbar gelagert ist, die sich z.B. in einer Richtung, im wesentlichen senkrecht zu den Achsen A1, A3 bzw der Längsachse des Verschlussmoduls erstreckt um Toleranzen auszugleichen und sicherzustellen, dass die Stempel mit ihren Stirnflächen korrekt und parallel zueinander ausgerichtet sind.

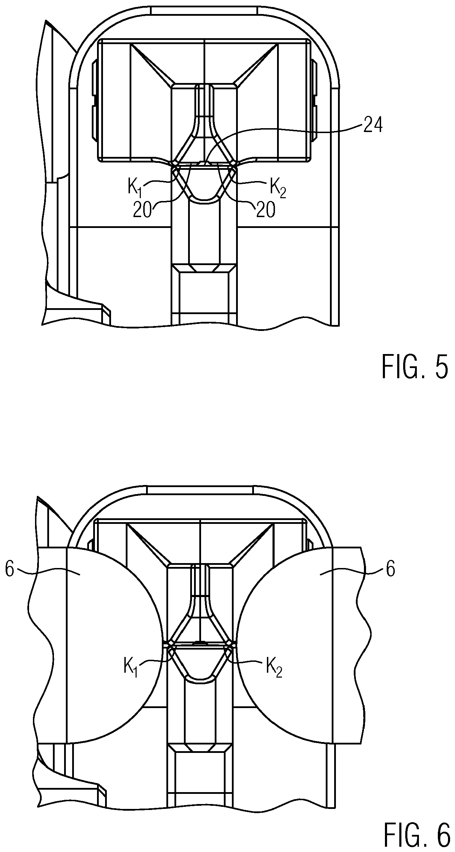

Fig. 5 zeigt eine Vorderansicht des Verschlussmoduls 1, wobei bei diesem Ausführungsbeispiel z.B. zwischen den Klemmflächen bzw. Stellen K1, K2 eine Aussparung 24 vorgesehen sein kann. Wesentlich ist, dass die Klemmstelle K1 zwischen der Elektrode 2a und der Wurstkuppe 6 und und die Klemmstelle K2 zwischen den Elektroden 2b und der gegenüberliegenden Wurstkuppe 6 angeordnet ist, wie insbesondere aus Fig. 6 hervorgeht. Die Klemmstelle des Wurstzopfes 4 liegt, wie aus Fig. 6 hervorgeht, vor der linken Wurstkuppe 6 und die Klemmstelle K2 liegt vor der rechten Wurstkuppe.

Wie aus den Fig. 2, 3 und 4 hervorgeht, umfasst dieses Ausführungsbeispiel optional einen hakenförmigen Bügel 21, der an dem Griffbereich 7 abgewandten Ende angeordnet ist, und das Ende bügelförmig umgibt. Somit dient dieser Bügel 21 als Schutz gegen Beschädigung. Der Bügel weist dabei insbesondere z.B. zwei zu einer Spitze S zulaufende Abschnitte 21a und 21b auf. In der Draufsicht ist in einem seitlichen Bereich eine Öffnung 27 zu erkennen, so dass der Bügel 21 als Haken Z.B. zur Positionierung des Moduls bei Nichtgebrauch benutzt werden kann. Der hakenförmige Bügel muss jedoch nicht zwangsläufig spitz zulaufen, sondern kann selbstverständlich auch eine andere Form, z.B. abgerundet, aufweisen.

Das Handgerät ist nicht auf eine Zangenform beschränkt, sondern kann auch, wie beispielsweise in Fig. 8 dargestellt ist, als Handmodul ausgebildet sein, bei dem sich die Stempel 3a, 3b aufeinander zu bewegen, wenn die Griffelemente 7, 7b aufeinander zubewegt werden. Hierzu kann beispielsweise eine Säulenführung 9 vorgesehen sein.

Wie aus Fig. 3 und 4 hervorgeht, kann in geschlossener Position zum Verschließen und Trennen eine Spannung an die Elektroden 2a, 2b angelegt werden. Die Spannungszufuhr kann entweder z.B. automatisch über einen Positionsschalter gestartet werden, wenn sich das Verschlussmodul in einer geschlossenen Position befindet (z.B. auf Anschlag) oder aber manuell über einen nicht dargestellten Schalter ausgelöst werden.

Dabei kann es sich um einen Schalter am Gerät handeln, oder aber auch beispielsweise um einen Fußschalter.

Gemäß einer bevorzugten Ausführungsform erfolgt die Spannungszufuhr automatisch. Es wird ein Meßpotential zwischen den beiden Elektroden angelegt. Mithilfe des Meßpotentials kann zum Beispiel der Widerstand zwischen den Elektroden gemessen werden und in Abhängigkeit des Widerstands bestimmt werden, ob sich eine Wursthülle zwischen den Elektroden befindet. Wenn ermittelt wird, dass sich ein Wurstzopf im Verschlussmodul zwischen den Elektroden befindet, wird, insbesondere nach einer einstellbaren Zeit, automatisch die Spannung und/oder der Strom und somit die Leistung zum Verschließen erhöht.

Als Elektrolyt zwischen den Elektroden 2a, 2b dient dann der Wurstzopf.

Das erfindungsgemäße Verfahren wird nachfolgend unter Bezugnahme der Fig. 1 bis 7 näher erläutert.

Zum Verschließen bzw. Verschließen und Abtrennen von gefüllten über einen Wurstzopf 4 verbundenen Wursthüllen 5 wird zunächst das Verschlussmodul 1 beispielsweise zwischen zwei gefüllten Wursthüllen 5 platziert oder an einem offenen Wurstende (nicht dargestellt), wie beispielsweise in Fig. 6 gezeigt ist. Dazu befindet sich das Verschlussmodul 1 in einer geöffneten Position, wie beispielsweise in Fig. 2 gezeigt. Die gegenüberliegenden Stempel 3a, 3b werden dann in einem Bereich zwischen gefüllten Wursthüllen 5 eingebracht, derart, dass der Wurstzopf 4 zwischen den Stempeln 3a, 3a platziert wird, wie beispielsweise in Fig. 6 oder Fig. 1a bis 1e gezeigt ist. Zum Verschließen bzw. Verschließen und Trennen müssen nun die Stempel relativ zueinander bewegt werden, wie durch den Pfeil P in den Figuren dargestellt ist. Dazu kann beispielsweise ein Bediener das Verschlussmodul wie eine Greifzange verwenden und den Griffbereich 7 umfassen und die Griffelemente 7a, 7b aufeinander zu bewegen.

Werden nun die Griffelemente 7a, 7b aufeinander zu bewegt, so bewegen sich auch die Stempel 3a, 3b aufeinander zu, bis sie eine Endposition erreichen, in der es zumindest die zuvor näher erläuterten Klemmstellen K1, K2 gibt, die den Wurstzopf einklemmen. Über den elektrisch leitenden Wurstzopf 4 sind jetzt die Elektroden 2a, 2b, unabhängig von ihrer Konfiguration entsprechend den Fig. 1a bis e miteinander leitend verbunden. Über einen Positionsschalter oder eine manuelle Betätigung eines entsprechenden Schalters kann dann Strom von einer Stromquelle (nicht dargestellt) über ebenfalls nicht dargestellte Kabel über den Elektrodenanschluss und die Elektrode 2a in den Wurstzopf 4 und von diesem in die weitere Elektrode 2b fließen. Besonders vorteilhaft fließt, wie beispielsweise in Fig. 1a gezeigt ist, oder aber auch aus Fig. 7 hervorgeht, der Strom zunächst von der Elektrode 2a in den Wurstzopf 4, dann durch den Wurstzopf in Längsrichtung L des Wurstzopfes zur zweiten Elektrode 2b. Somit ergibt sich ein vergrößerter stromdurchflossener Bereich mit einer Länge von 2,5 mm - 8 mm.

Besonders geeignet haben sich hochfrequente Ströme in einem Frequenzbereich von 300 kHz bis 500 kHZ erwiesen. Die Spannung liegt vorteilhafterweise in einem Bereich von 50 bis 500 V, insbesondere 80 bis 430 V. Die elektrische Energie wird in thermische Energie umgewandelt und erwärmt den Wurstzopf z.B. auf Temperaturen von 60 bis 350 °C. In diesem Temperaturbereich beginnt z.B. die thermische Denaturierung von Kollagen, was an einer weißlichen Verfärbung zu erkennen ist.

Ab ca. 100 °C verdampft das Wasser und der z.B. offene Naturdarm koaguliert und wird somit verschlossen. Bei weiterer Energiezuführung steigt die Temperatur und es kommt zum Zersetzen und Abtrennen des Wurstzopfes.

Das bedeutet, dass zunächst die Wursthülle koaguliert und bei weiterer Energiezuführung ein Zersetzen des Darms stattfindet. Je mehr Energie pro Zeit (elektrische Leistung) abgegeben wird, desto schneller erhöht sich die Temperatur des Wurstzopfes, z.B. Naturdarms. Wird zu viel Leistung zugeführt, entsteht eventuell keine Denaturierung des Darms, sondern es kommt zu einer raschen Erwärmung und zur Zersetzung des Darms. Die Abteilstelle ist nicht koaguliert bzw. verschlossen. Daher sollte die Leistung nicht zu hoch sein, so dass eine Denaturierung langsam stattfinden kann und somit ein sicherer Verschluss gewährleistet ist. Die Leistung sollte daher zum Verschließen beispielsweise in einem Bereich von 40 W bis 150 W, vorzugsweise zwischen 50 W und 100 W liegen.

Gemäß einer bevorzugten Ausführungsform wird während eines ersten Zeitintervalls t₁ eine bestimmte Energiemenge pro Zeit abgegeben, derart, dass der Wurstzopf erwärmt wird und sich verschließt, insbesondere koaguliert. Soll nun der Wurstzopf 4 auch noch abgetrennt werden, so kann während eines zweiten Zeitintervalls t₂ eine Leistungserhöhung, insbesondere peakartige Leistungserhöhung erfolgen, was zu einem schnellen Trennvorgang führt. Die Stromzufuhr wird dann entweder manuell oder automatisch, beispielsweise nach einer vorgegebenen Zeit oder durch Auslösen eines Schalters oder Positionsschalters beendet. Die Stempel 3a, 3b können dann wieder entgegen der Pfeilrichtung P auseinander bewegt werden, so dass sich, wie aus Fig. 2 hervorgeht, wieder ein Abstand zwischen den Stempeln 3a, 3b ergibt und das Modul entfernt werden kann.

Anstatt manuell können die Stempel 3a, 3b auch durch einen Stellantrieb, insbesondere pneumatischen oder elektrischen Stellantrieb aufeinander zu oder auseinander bewegt werden.

## Patentansprüche

1. Verschlussmodul (1) zum Verschließen und/oder Trennen von gefüllten über einen Wurstzopf (4) verbundenen Wursthüllen (5) mit
zwei relativ aufeinander zu beweglichen Stempeln (3a,3b), die derart angeordnet sind, dass ein Wurstzopf (4) dazwischen platzierbar ist, und die den Wurstzopf in einem geschlossenen Zustand einklemmen können und mit
einer ersten und einer zweiten Elektrode (2a, b), durch die in geschlossenem Zustand der Stempel (3a, 3b) ein Strom von der ersten Elektrode (2a) in den Wurstzopf (4) und über den Wurstzopf (4) in die zweite Elektrode (2b) fließen kann, wobei die elektrische Energie beim Durchfließen des Wurstzopfes in thermische Energie umgewandelt wird und den Wurstzopf erwärmt, wodurch die gefüllten Wursthüllen verschlossen vorzugsweise zusätzlich getrennt werden, wobei
das Verschlussmodul als Handgerät ausgebildet ist, mit einem Griffbereich (7), der zwei beabstandet gegenüberliegende, relativ aufeinander zu bewegbare Griffelemente (7a, b) umfasst, die jeweils derart mit den Stempeln (3a, 3b) gekoppelt sind, dass wenn die Griffelemente (7a, 7b) aufeinander zu bewegt werden, sich auch die jeweiligen Elektroden und Stempel aufeinander zu bewegen.

2. Verschlussmodul (1) nach Anspruch 1, **dadurch gekennzeichnet, dass** die Elektroden (2a, 2b) derart angeordnet sind, dass sie von den Wurstkuppen (6) der Wursthüllen (5) in geschlossenem Zustand der Stempel (3a, 3b) beabstandet sind, derart, dass die Elektroden (2a, 2b) die gefüllten Wursthüllen nicht berühren, wobei insbesondere isolierendes Material an den nach außen gewandten Elektrodenseiten vorgesehen ist.

3. Verschlussmodul nach Anspruch 1 oder 2, **dadurch gekennzeichnet, dass**
an zumindest an der jeweiligen, der Wurstkuppe (6) des Wurstzopfes zugewandten Seite der Elektroden (2a, 2b), eine Klemmstelle (K1, K2) der Stempel (3a, 3b) angeordnet ist und vorzugsweise
beide Elektroden (2a, 2b) in einem der Stempel (3a) voneinander beabstandet angeordnet sind oder
die erste Elektrode (2a) in einem der Stempel (3a) und die zweite Elektrode (2b) in dem gegenüberliegenden Stempel (3b) angeordnet ist, wobei die Elektroden vorzugsweise auf den gegenüberliegenden Seiten des Wurstzopfes seitlich versetzt zueinander angeordnet sind.

4. Verschlussmodul nach mindestens einem der Ansprüche 1-3, **dadurch gekennzeichnet, dass** die Elektroden (2a, 2b) im Stempel (3a, 3b) nach außen isoliert sind und nur an ihrem dem Wurstzopf zugewandten Ende ein freier Kontaktbereich (20) vorgesehen ist, wobei der Stempel (3a, 3b) insbesondere einstückig ausgebildet ist oder jede Elektrode (2a, 2b) in einem eigenen Stempelelement angeordnet ist.

5. Verschlussmodul nach mindestens Anspruch 3, **dadurch gekennzeichnet, dass** die Elektroden (2a, 2b) eine isolierende Beschichtung aufweisen oder in insolierenden Material eingegossen sind, wobei der Kontaktbereich (20) der Elektroden (2a, 2b) ausgespart ist.

6. Verschlussmodul nach mindestens einem der Ansprüche 1-5 **dadurch gekennzeichnet, dass** der Abstand der nebeneinander angeordneten Elektroden (2a, 2b) in einem Bereich von 0,5 mm bis 3 mm liegt.

7. Verschlussmodul nach mindestens einem der Ansprüche 1-6, dass zumindest einer der gegenüberliegenden Stempel (3a, 3b), um eine Achse A2,A3, die sich entlang einer Längsrichtung L erstreckt, drehbar gelagert ist, insbesondere frei drehbar gelagert ist, derart, dass die gegenüberliegenden Klemmflächen (K1, K2) im Wesentlichen parallel zueinander verlaufen.

8. Verschlussmodul nach mindestens einem der Ansprüche 1-8, **dadurch gekennzeichnet, dass** die Elektroden und Stempel manuell oder mittels Stellantrieb, insbesondere pneumatischem oder elektrischem Stellantrieb, relativ aufeinander zu bewegbar sind.

9. Verschlussmodul nach mindestens einem der Ansprüche 1-7, **dadurch gekennzeichnet, dass** das Handgerät als Handzange ausgebildet ist, deren Griffelemente drehbar gelagert sind.

10. Verschlussmodul nach Anspruch 9, **dadurch gekennzeichnet, dass** das Verschlussmodul an seinem dem Griffbereich (7) abgewandten Ende einen hakenförmigen Bügel (21) aufweist, der insbesondere zwei zu einer Spitze (S) zulaufende Abschnitte (21a,21b) aufweist.

11. Verfahren zum Verschließen und/oder Trennen von gefüllten über einen Wurstzopf (4) verbundenen Wursthüllen (5) mit einem Verschlussmodul (1) nach Anspruch 1 mit folgenden Schritten:
Platzieren eines Wurstzopfes (4) zwischen einem ersten Stempel (3a) und einem zweiten Stempel (3b),
Bewegen der Stempel relativ aufeinander zu, derart, dass die Stempel (3a, 3b) geschlossen werden und den Wurstzopf (4) einklemmen,
wonach ein Strom von der ersten Elektrode in den Wurstzopf (4) fließt und über den Wurstzopf in die zweite Elektrode (2a), wobei die elektrische Energie beim Durchfließen des Wurstzopfes in thermische Energie umgewandelt wird und den Wurstzopf erwärmt wodurch die gefüllten Wursthülle verschlossen, vorzugsweise zusätzlich getrennt werden, wobei das Verschlussmodul als Handgerät ausgebildet ist, mit einem Griffbereich (7), der zwei beabstandet gegenüberliegende, relativ aufeinander zu bewegbare Griffelemente (7a, Bb) umfasst, die jeweils derart mit den Stempeln (3a, 3b) gekoppelt sind, dass wenn die Griffelemente (7a, 7b) aufeinander zu bewegt werden, sich auch die jeweiligen Elektroden und Stempel aufeinander zu bewegen

12. Verfahren nach Anspruch 11, **dadurch gekennzeichnet, dass** der Wurstzopf (4) an zumindest der, der jeweiligen Wurstkuppe zugewandten Seite der Elektroden (2a, 2b) durch die Stempel (3a, 3b) geklemmt wird.

13. Verfahren nach mindestens einem der Ansprüche 11 oder 12, **dadurch gekennzeichnet, dass** über die Elektroden (2a, 2b) während eines ersten Zeitabschnitts t1 eine Energiemenge pro Zeit abgegeben wird, derart, dass sich der Wurstzopf (4) erwärmt und verschlossen wird und insbesondere
während eines zweiten Zeitabschnitts t2 weiter Energie zugeführt wird wobei vorzugsweise die Energiemenge pro Zeit, insbesondere peakartig, erhöht wird, derart, dass es zu einem Zersetzen und Trennen des Wurstzopfes (4) kommt.

14. Verfahren nach mindestens einem der Ansprüche 11-13, **dadurch gekennzeichnet, dass** der Strom ein hochfrequenter Strom ist, insbesondere in einem Frequenzbereich von 300 kHz bis 500 kHz.

15. Verfahren nach mindestens einem der Ansprüche 11-14 **dadurch gekennzeichnet, dass** eine Spannung in einem Bereich von 50-500 V, insbesondere 80-430 V an die Elektroden (2a, 2b) angelegt wird.

16. Verfahren nach mindestens einem der Ansprüche 11 - 15, **dadurch gekennzeichnet, dass** die Klemmung des Wurstzopfes (4) erst aufgehoben wird, wenn kein Strom mehr durch die Elektroden (2a, 2b) fließt.

## Claims

1. A closure module (1) for closing and/or separating filled sausage casings (5) connected via a sausage neck (4), comprising
two stamps (3a, 3b) movable relative to and towards each other and arranged such that a sausage neck (4) can be placed therebetween, the stamps (3a, 3b) being capable of clamping the sausage neck in a closed condition, and further comprising
a first and a second electrode (2a, b), through which, in a closed condition of the stamps (3a, 3b), a current can flow from the first electrode (2a) into the sausage neck (4) and via the sausage neck (4) into the second electrode (2b), wherein the electric energy is converted into thermal energy when passing through the sausage neck and heats the sausage neck whereby the filled sausage casings (5) are closed, preferably additionally separated from each other, wherein
the closure module is configured as a hand-held device with a handle area (7) that comprises two spaced-apart, opposed handle elements (7a, 7b), which are movable relative towards each other and which are each coupled with the respective stamps (3a, 3b) such that, when the handle elements (7a, 7b) are moved towards each other, also the respective electrodes and stamps will move towards each other.

2. The closure module (1) according to claim 1, **characterized in that** the electrodes (2a, 2b) are arranged such that, in a closed condition of the stamps (3a, 3b), they are spaced apart from the rounded sausage ends (6) of the sausage casings (5) such that the electrodes (2a, 2b) do not contact the filled sausage casings, the electrode sides facing outwards having in particular provided thereon an insulating material.

3. The closure module according to claim 1 or 2, **characterized in that**
a clamping point (K1, K2) of the stamps (3a, 3b) is arranged on at least the respective side of the electrodes (2a, 2b) facing the rounded sausage end (6) of the sausage neck, and that, preferably,
both electrodes (2a, 2b) are arranged in one of the stamps (3a) in spaced relationship with each other or that
the first electrode (2a) is arranged in one of the stamps (3a) and the second electrode (2b) in the opposite stamp (3b), the electrodes being preferably arranged on opposite sides of the sausage neck such that they are laterally displaced relative to each other.

4. The closure module according to at least one of the claims 1-3, **characterized in that** the electrodes (2a, 2b) in the stamps (3a, 3b) are insulated towards the outside and that a free contact area (20) is only provided on their end facing the sausage neck, the stamp (3a, 3b) being in particular configured as an integral component or each electrode (2a, 2b) being arranged in a stamp element of its own.

5. The closure module according to at least claim 3, **characterized in that** the electrodes (2a, 2b), except for the contact area (20) of the electrodes (2a, 2b), are provided with an insulating coating or are potted in an insulating material.

6. The closure module according to at least one of the claims 1-5, **characterized in that** the distance between the electrodes (2a, 2b) arranged side by side lies in a range of 0.5 mm to 3 mm.

7. The closure module according to at least one of the claims 1-6, **characterized in that** at least one of the opposed stamps (3a, 3b) is supported to be rotatable, in particular freely rotatable, about an axis A₂, A₃ which extends along a longitudinal direction L, in such a way that the opposed clamping surfaces (K1, K2) extend substantially parallel to each other.

8. The closure module according to at least one of the claims 1-7, **characterized in that** the electrodes and the stamps are movable relative to and towards one another manually or by means of a positioning drive, in particular a pneumatic or an electric positioning drive.

9. The closure module according to at least one of the claims 1-7, **characterized in that** and that the hand-held device is configured as hand pliers whose handle elements are rotatably supported.

10. The closure module according to claim 9, **characterized in that** the closure module has, on its end facing away from the handle area (7), a hook-shaped bow (21) comprising in particular two portions (21a, 21b) tapering into a tip (S).

11. A method for closing and/or separating filled sausage casings (5) connected via a sausage neck (4) with a closure module according to claim 1, comprising the following steps:
placing a sausage neck (4) between a first stamp (3a) and a second stamp (3b),
moving the stamps relative to and towards each other such that the stamps (3a, 3b) will be closed and will clamp the sausage neck (4) in position,
whereupon a current flows from the first electrode into the sausage neck (4) and via the sausage neck into the second electrode (2a), wherein the electric energy is converted into thermal energy when passing through the sausage neck and heats the sausage neck whereby the filled sausage casings will be closed, preferably additionally separated from each other, wherein the closure module is configured as a hand-held device with a handle area (7) that comprises two spaced-apart, opposed handle elements (7a, 7b), which are movable relative towards each other and which are each coupled with the respective stamps (3a, 3b) such that, when the handle elements (7a, 7b) are moved towards each other, also the respective electrodes and stamps will move towards each other.

12. The method according to claim 11, **characterized in that** the sausage neck (4) is clamped in position by the stamps (3a, 3b), at least on the side of the electrodes (2a, 2b) facing the respective rounded sausage end.

13. The method according to at least one of the claims 11 or 12, **characterized in that,** during a first period of time t₁, an amount of energy per unit time is supplied through the electrodes (2a, 2b) such that the sausage neck (4) is heated and will be closed, and in particular that
during a second period of time t₂, the supply of energy is continued and the amount of energy per unit time is preferably increased, in particular in a peaklike manner, such that the sausage neck (4) will decompose and will be cut off.

14. The method according to at least one of the claims 11 - 13, **characterized in that** the current is a high-frequency current, in particular in a frequency range of 300 kHz to 500 kHz.

15. The method according to at least one of the claims 11 - 14, **characterized in that** a voltage in a range of 50 - 500 V, in particular 80 - 340 V, is applied to the electrodes (2a, 2b).

16. The method according to at least one of the claims 11 - 15, **characterized in that** the clamping of the sausage neck (4) will not be eliminated until the flow of current through the electrodes (2a, 2b) has terminated.

## Revendications

1. Module de fermeture (1) pour fermer et/ou séparer les enveloppes de saucisse remplies (5) et reliées par une tresse de chair à saucisse (4), comprenant
deux poinçons (3a, 3b) mobiles l'un par rapport à l'autre et disposés de manière à pouvoir être séparés par une tresse de chair à saucisse (4), qui peuvent serrer la tresse de chair à saucisse une fois refermée et sont pourvus
d'une première électrode et d'une seconde électrode (2a, b), à travers lesquelles, lorsque les poinçons (3a, 3b) sont fermés, un courant peut circuler de la première électrode (2a) dans la tresse de chair à saucisse (4) et à travers la tresse de chair à saucisse (4) dans la seconde électrode (2b), l'énergie électrique étant convertie en énergie thermique lorsqu'elle circule à travers la tresse de chair à saucisse et chauffe la tresse de chair à saucisse, les enveloppes de saucisse remplies, lorsqu'elles sont fermées, de préférence séparées, dans lequel
le module de fermeture est conçu comme un dispositif portable à la main, avec une zone de préhension (7) comprenant deux éléments de préhension (7a, b) espacés l'un de l'autre et opposés, qui peuvent être déplacés l'un par rapport à l'autre et sont chacun couplés aux poinçons (3a, 3b) de telle sorte que lorsque les éléments de préhension (7a, 7b) sont déplacés l'un vers l'autre, les électrodes et les poinçons respectifs se déplacent également l'un vers l'autre.

2. Module de fermeture (1) selon la revendication 1, **caractérisé en ce que** les électrodes (2a, 2b) sont disposées de telle sorte que, lorsque les poinçons (3a, 3b) sont fermés, elles sont espacées des crosses de saucisse (6) des enveloppes de saucisse (5) de telle sorte que les électrodes (2a, 2b) ne touchent pas les enveloppes de saucisse remplies, un matériau isolant étant notamment prévu sur les côtés des électrodes orientés vers l'extérieur.

3. Module de fermeture selon les revendications 1 ou 2, **caractérisé en ce que** un point de serrage (K1, K2) des poinçons (3a, 3b) est disposé au moins sur le côté respectif des électrodes (2a, 2b) tourné vers la crosse (6) de la tresse de chair à saucisse et de préférence
les deux électrodes (2a, 2b) sont disposées dans l'un des poinçons (3a) à distance l'une de l'autre ou
la première électrode (2a) est disposée dans l'un des poinçons (3a) et la seconde électrode (2b) dans le poinçon opposé (3b), les électrodes étant de préférence disposées de manière décalée latéralement l'une par rapport à l'autre sur les côtés opposés de la tresse de chair à saucisse.

4. Module d'étanchéité selon au moins l'une des revendications 1 à 3, **caractérisé en ce que** les électrodes (2a, 2b) dans le poinçon (3a, 3b) sont isolées de l'extérieur et une zone de contact libre (20) est prévue seulement à leur extrémité tournée vers la tresse de chair à saucisse, le poinçon (3a, 3b) étant en particulier formé d'une seule pièce ou chaque électrode (2a, 2b) étant disposée dans son propre élément de poinçon.

5. Module de fermeture selon au moins la revendication 3, **caractérisé en ce que** les électrodes (2a, 2b) ont un revêtement isolant ou sont coulées dans les mêmes dimensions, la surface de contact (20) des électrodes (2a, 2b) étant laissée de côté.

6. Module de fermeture selon au moins l'une des revendications 1 à 5, **caractérisé en ce que** la distance entre les électrodes (2a, 2b) disposées l'une à côté de l'autre se situe dans une plage de 0,5 mm à 3 mm.

7. Module de fermeture selon au moins l'une des revendications 1 à 6, en ce qu'au moins l'un des poinçons opposés (3a, 3b) est monté de manière à pouvoir tourner autour d'un axe A2, A3, qui s'étend dans une direction longitudinale L, en particulier est monté de manière à pouvoir tourner librement, de telle sorte que les surfaces de serrage opposées (K1, K2) s'étendent essentiellement parallèlement l'une à l'autre.

8. Module de fermeture selon au moins l'une des revendications 1 à 8, **caractérisé en ce que** les électrodes et les poinçons peuvent être déplacés les uns par rapport aux autres manuellement ou au moyen d'un actionneur, en particulier un actionneur pneumatique ou électrique.

9. Module de fermeture selon au moins l'une des revendications 1 à 7, **caractérisé en ce que** l'outil à main est conçu comme une paire de pinces à main dont les éléments de poignée sont montés de manière à pouvoir tourner.

10. Module de fermeture selon la revendication 9, **caractérisé en ce que** le module de fermeture présente à son extrémité opposée à la zone de préhension (7) une pince en forme de crochet (21), laquelle pince présente en particulier deux sections (21a, 21b) s'effilant vers une pointe (S).

11. Procédé de fermeture et/ou de séparation de enveloppes de saucisse remplies (5) et reliées par une tresse de chair à saucisse (4) à un module de fermeture (1) selon la revendication 1 avec les étapes suivantes :
placer une tresse de chair à saucisse (4) entre un premier poinçon (3a) et un second poinçon (3b),
rapprocher les poinçons l'un de l'autre de manière à ce que les poinçons (3a, 3b) soient fermés et enserrent la tresse de la saucisse (4),
après quoi, faire circuler un courant de la première électrode dans la tresse de chair à saucisse (4) et, à travers la tresse de chair à saucisse, dans la seconde électrode (2a), l'énergie électrique étant transformée en énergie thermique lors de son passage dans la tresse de chair à saucisse et chauffant la tresse de chair à saucisse, l'enveloppe de la saucisse remplie étant scellée, de préférence encore séparée, dans lequel le module de fermeture est conçu comme dispositif portable à la main, avec une zone de préhension (7) comprenant deux éléments de préhension (7a, 7b) espacés l'un de l'autre et opposés, qui peuvent être déplacés l'un par rapport à l'autre et sont chacun couplés aux poinçons (3a, 3b) de telle sorte que lorsque les éléments de préhension (7a, 7b) sont déplacés l'un vers l'autre, les électrodes et les poinçons respectifs se déplacent également l'un vers l'autre.

12. Procédé selon la revendication 11, **caractérisé en ce que** la tresse de chair à saucisse (4) est enserré par les poinçons (3a, 3b) au moins sur le côté des électrodes (2a, 2b) tourné vers la crosse de saucisse respective.

13. Procédé selon au moins une des revendications 11 ou 12, **caractérisé en ce qu'**une quantité d'énergie est émise par temps par l'intermédiaire des électrodes (2a, 2b) pendant une première période de temps t1 de telle sorte que la tête de saucisse (4) est chauffée et scellée et en particulier pendant une seconde période t2, de l'énergie supplémentaire est fournie, la quantité d'énergie par temps étant de préférence augmentée, en particulier sous forme de pic, de telle sorte que la tresse de chair à saucisse (4) soit décomposée et séparée.

14. Procédé selon au moins l'une des revendications 11 à 13, **caractérisé en ce que** le courant est un courant à haute fréquence, en particulier dans une gamme de fréquences de 300 kHz à 500 kHz.

15. Procédé selon au moins une des revendications 11 à 14, **caractérisé en ce qu'**une tension dans une plage de 50-500 V, en particulier 80-430 V, est appliquée aux électrodes (2a, 2b).

16. Procédé selon au moins une des revendications 11 à 15, **caractérisé en ce que** le serrage de la tête de saucisse (4) n'est libéré que lorsque plus aucun courant ne passe par les électrodes (2a, 2b).
